# EUROPEAN PATENT SPECIFICATION

(11) **EP 2 993 373 B1**
(45) Date of publication and mention of the grant of the patent: **11.07.2018**
(21) Application number: 13883514.5
(22) Date of filing: 29.07.2013
(51) Int. Cl.: F16F 9/14, B60D 1/00, B60D 5/00, B62D 47/02, B62D 53/00

(54) **ROTARY DAMPER TYPE HYDRAULIC BUFFER SYSTEM**
HYDRAULISCHES PUFFERSYSTEM VOM ROTATIONSDÄMPFERTYP
SYSTÈME D'AMORTISSEMENT HYDRAULIQUE DE TYPE AMORTISSEUR ROTATIF

(30) Priority: 28.04.2013 CN 201310156827
(43) Date of publication of application: 09.03.2016
(73) Proprietor: Jointech (Suzhou) Vehicle System Co., Ltd., Suzhou, Jiangsu 215211 (CN)
(72) Inventor: HAO, Qingjun, Suzhou Jiangsu 215211 (CN)
(74) Representative: London IP Ltd
(86) International application number: PCT/CN2013/080276
(87) International publication number: WO 2014/176833

(56) References cited:
- EP-A1- 1 375 328
- WO-A1-84/01135
- WO-A1-2008/153481
- CN-A- 103 195 855
- CN-U- 203 202 106
- CN-Y- 201 086 607
- DE-A1- 2 929 022
- DE-A1- 2 929 022
- US-A1- 2004 055 808
- US-B1- 6 422 584

## Description

### TECHNICAL FIELD

The present invention relates to the technical field of damping vibration attenuation control systems for vehicles, in particular to a hydraulic buffer system with a rotary damper.

### BACKGROUND ART

With the rapid development of automobile manufacturing industry in China, various vehicle manufacturing industries are also advancing by leaps and bounds, and articulated coaches are gradually generalized in large and medium-sized cities in China owing to the characteristics of large passenger capacity, high utilization factor and the like. The articulated coach is generally composed of a front carriage, a rear carriage, a chassis articulation system for connecting the front carriage with the rear carriage, and the like, wherein the chassis articulation system comprises a front frame, a rear frame, a turntable bearing, a hydraulic buffer device and the like, the front frame is generally fixedly connected with the front frame of the articulated coach by means of a front crossbeam, and the rear frame is fixedly connected with the rear carriage of the articulated coach by means of a rear crossbeam.

Wherein, the hydraulic buffer device in the chassis articulation system acts as a key factor for restricting the performances of the articulated coach. The hydraulic buffer device of the articulated coach generally consists of a left hydraulic cylinder, a right hydraulic cylinder, a hydraulic controller and an electric control system wherein the amplitude of the output resistance of the hydraulic cylinder is converted under the control of the hydraulic controller, and the electric control system sends a signal to the hydraulic controller according to the angle of turn of the vehicle, so that different pressure values can be converted by the hydraulic controller. Although the hydraulic buffer control system can form different damping according to the change of an included angle of the vehicle, the structure of the system is relatively complicated, and the left hydraulic cylinder and the right hydraulic cylinder are stressed unbalancedly and occupy a large space; and in addition, an oil leakage phenomenon occasionally happens at ajoint of a hydraulic component and a pipeline, such that the performances of the vehicle are affected, and the vehicle will be caused not to run in a severe case.

EP1375328A1 discloses a steering device, which is capable of providing optimum damping characteristics for steering operation during traveling of a two-wheeler. However, the device does not regulate pressure, and therefore is vulnerable to damage in the event of a pressure surge.

### SUMMARY OF THE INVENTION

The invention aims to overcome of the defects of the prior art, and an object thereof is to provide a hydraulic buffer system with a rotary damper for a purpose of improving the buffer effect of the rotary damper.

In order to achieve the above objectives, the present invention is embodied by the following technical solution: the hydraulic buffer system with the rotary damper comprises a hydraulic buffer system comprising a rotary damper comprising a stator, a rotor capable of rotating relative to the stator, and a hydraulic cavity formed between the stator and the rotor,
a first one-way valve, a second one-way valve, a third one-way valve, a
fourth one-way valve, and a proportional overflow valve,
a first oil way, wherein the second one-way valve, the proportional overflow valve, and the fourth one-way valve are sequentially connected in series to form the first oil way, and
a second oil way, wherein the third one-way valve, the proportional overflow
valve, and the first one-way valve are sequentially connected in series to form the second oil way,
characterized in that
when the rotor rotates anticlockwise, relative to the stator , the hydraulic oil in the first cavity is compressed to generate pressure; meanwhile, the volume of a cavity body in the second cavity becomes large, the cavity body internally generates a negative pressure and needs to be supplemented with hydraulic oil; at this moment, the first oil way belongs to an oil discharge way, so that the compressed hydraulic oil enters the first oil port from the first oil way, the third one-way valve is opened, and the hydraulic oil reaches the port P of the overflow valve and the port P of the proportional overflow valve; and when the pressure of the hydraulic oil in the first oil way reaches a pressure value set by the proportional overflow valve, the proportional overflow valve is opened, the hydraulic oil reaches one end of the first one-way valve, and then the first one-way valve is opened, the hydraulic oil enters the second oil way from the second oil port, and then the compressed hydraulic oil is supplemented to the cavity body of the second cavity ;
when the rotor rotates clockwise relative to the stator, hydraulic oil in the second cavity is compressed to form a pressure-bearing cavity to generate pressure; in the meantime, the volume of a cavity body of the first cavity becomes large, the cavity body internally generates a negative pressure and needs to be supplemented with hydraulic oil; at this moment, the second oil way belongs to an oil discharge way, the compressed hydraulic oil enters the second oil port through the second oil way , the second one-way valve is opened, and the hydraulic oil reaches the port P of the overflow valve and the port P of the proportional overflow valve; and when the pressure of hydraulic oil in the second oil way reaches a pressure value set by the proportional overflow valve, the proportional overflow valve is opened, the hydraulic oil reaches one end of the fourth one-way valve , and then the fourth one-way valve is opened, the hydraulic oil enters the first oil way from the first oil port, and the compressed hydraulic oil is supplemented to the cavity body of the first cavity;
the pressure sensor is connected with the overflow valve and the proportional overflow valve in series and is configured to detect the pressure at a port P of the overflow valve and the pressure at a port P of the proportional overflow valve and transmit detected data to an electric control unit, the electric control unit is configured to correspondingly set a pressure value for the proportional overflow valve according to a vehicle velocity signal sent from the vehicle and an angle signal sent from the angle sensor; the computer is configured to compare the measured pressure value at the port P of the proportional overflow valve with a pressure value set by the system, and adjust the pressure value of port P;
when the electric control system has a fault to cause power failure of the system, the proportional overflow valve is at a completely closed state, the working pressure of the rotary damper is a safety pressure set by the overflow valve 6, and the pressure value of the overflow valve can be manually adjusted when the basic damping force needs to be regulated.

The buffer system also comprises an overflow valve and a pressure sensor, wherein the overflow valve and the proportional overflow valve are connected in parallel and are then connected between the second one-way valve and the fourth one-way valve in series; and the pressure sensor is connected with the overflow valve and the proportional overflow valve in series and is configured to detect the pressure at a port of the overflow valve and the pressure at a port of the proportional overflow valve.

The rotary damper also comprises an upper end cover and a lower end cover which are configured to package the stator and the rotor.

The circumferential surface of the inner wall of the stator is equipped with at least one partition board groove, wherein a partition board is fixedly arranged in the partition board groove, the outer wall of the stator is equipped with a first oil port and a second oil port which are symmetrical and are respectively located in both sides of each partition board, and the first oil port and the second oil port are communicated with the first oil way and the second oil way respectively.

The bottom of the partition board groove is equipped with a compaction oil groove.

The end surface of the stator and the end surface of the rotor are equipped with a sealing groove respectively.

The circumferential surface of the outer wall of the rotor is equipped with at least one blade groove, wherein a blade is fixedly arranged in each blade groove, and an oil suction valve mounting port is configured in each of both sides of each blade.

The at least one first cavity and the at least one second cavity of the hydraulic cavity are formed by the partition boards and the blades in a spacing manner.

The hydraulic buffer system of the rotary damper also comprises a hydraulic integration block, and all the oil paths and valve equipment are arranged in the hydraulic integration block.

The present invention has the beneficial effects that:
1. The pressure control is simple, and the electric control unit supplies a linear voltage to the proportional overflow valve according to different vehicle velocities and angles, so that the damping force of the damper linearly increases with the increase of the vehicle velocity and the angle; due to the adoption of multiple sealing and the mounting of the oil suction valves, basically no oil leakage is ensured; and when the electric control system has a fault, basic damping can be used.
2. The manufacturing cost is low, the maintenance and mounting are convenient, no expensively processed integration device or a rotary valve needing high manufacturing and processing precision is required to be used, and therefore the manufacturing cost is greatly reduced and the competitiveness on the market is improved.
3. Stepped voltage regulation can be realized, and different working pressures of the rotary damper can be set according to different circumstances, and thus the safety coefficient is high.

### BRIEF DESCRIPTION OF THE DRAWINGS

FIG.1 is a principle diagram of the hydraulic buffer system with the rotary damper of the present invention.
FIG.2 is a stereoscopic schematic diagram of the rotary damper of the present invention.
FIG.3 is a stereoscopic schematic diagram after the upper end cover is removed from the rotary damper of the present invention.
FIG.4 is a stereoscopic structure schematic diagram of the stator of the present invention.
FIG.5 is a plane structure schematic diagram of the stator of the present invention.
FIG.6 is a stereoscopic structure schematic diagram of the rotor of the present invention.
FIG.7 is a plane structure schematic diagram of the rotor of the present invention.
FIG.8 is a stereoscopic structure schematic diagram of the integration block in the specific embodiment of the present invention.

In the drawings, the rotary damper 1, the stator 11, the flange surface 111, the first oil way 112, the second oil way 113, the partition board groove 114, the partition board 115, the first oil port 116, the second oil port 117, the sealing groove 118, the compaction oil groove 119, the rotor 12, the blade groove 121, the blade 122, the end surface sealing groove 123, the axial surface sealing groove 124, the oil suction valve mounting port 125, the hydraulic cavity 13, the first cavity 131, the second cavity 132, the upper end cover 14, the lower end cover 15, the first one-way valve 2, the second one-way valve 3, the third one-way valve 4, the fourth one-way valve 5, the overflow valve 6, the proportional overflow valve 7, the pressure sensor 8, the sealing ring 9 and the hydraulic integration block 10 are marked.

### DETAILED DESCRIPTIONS OF THE PREFERRED EMBODIMENTS

The technical solution of the embodiment of the present invention will be described clearly and completely below in conjunction with the attached drawings of the present invention.

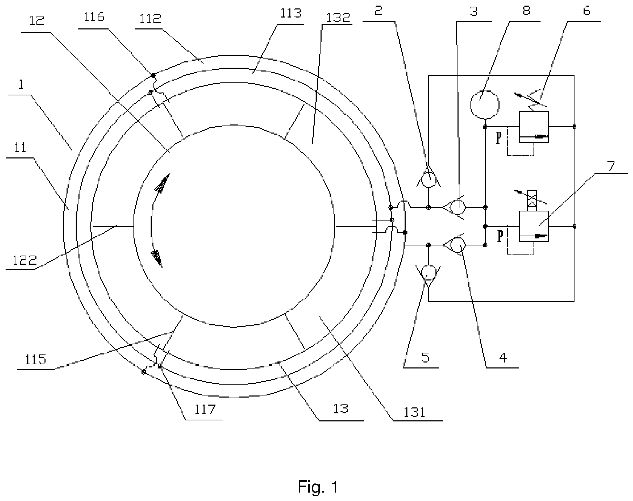

As shown FIG.1, the hydraulic buffer system with the rotary damper disclosed by the present invention comprises the rotary damper 1, a first one-way valve 2, a second one-way valve 3, a third one-way valve 4, a fourth one-way valve 5, an overflow valve 6, a proportional overflow valve 7 and a pressure sensor 8, wherein the rotary damper 1 comprises a stator 11, a rotor 12 capable of rotating relative to the stator and a hydraulic cavity 13 formed between the stator 11 and the rotor 12; the rotor 12 is positioned on the inner side of the stator 1l and is concentric with the stator 11; and a first oil way 12 and a second oil way 113 are configured on a flange surface 111 of the upper end of the stator 11 in the circumferential direction. The hydraulic cavity 13 comprises at least one first cavity 131 and at least one second cavity 132 which are communicated with the first oil way 112 and the second oil way 113 respectively.

Wherein, the second one-way valve 3, the proportional overflow valve 7 and the fourth one-way valve 5 are sequentially connected in series to form the first oil path, and the third one-way valve 4, the proportional overflow valve 7 and the first one-way valve 2 are sequentially connected in series to form the second oil path.

As a safety valve of the system, the overflow valve 6 is configured to set the safety pressure of the system, and the pressure value of the overflow valve 6 can be set manually; and when an electric control system has a fault to cause power failure of the system, the overflow valve 6 provides basic damping for the rotary damper 1 so as to support the vehicle to run to a repair factory, and the basic damping force can be regulated manually in case of needing to be regulated in a driving process, and thus a safety protection effect is achieved.

The overflow valve 6 and the proportional overflow valve 7 are connected in parallel and are then connected in series between the second one-way valve 3 and the fourth one-way valve 5; the pressure sensor 8 is connected with the overflow valve 6 and the proportional overflow valve 7 in series and is configured to detect the pressure at a port P of the overflow valve 6 and the pressure at a port P of the proportional overflow valve 7 and transmit detected data to an electric control unit, a computer is configured to compare the detected pressure value with a pressure value set by the system, and if the detected pressure is slightly low, the electric control unit sends a signal to the proportional overflow valve 7, and the proportional overflow valve 7 increases the pressure value after receiving the signal, so that the pressure at the port P of the proportional overflow valve 7 reaches a set pressure value; and in the same way, when the detected pressure value is slightly high, the proportional overflow valve 7 correspondingly relieves the pressure to reduce the pressure value, and the proportional overflow valve 7 here can play roles of pressure regulation and safety protection at the same time. In examples which do not form part of the claimed invention, the proportional overflow valve 7 can be replaced with a fixed hydraulic damper, and an electromagnetic valve is then additionally arranged to realize stepped pressure regulation.

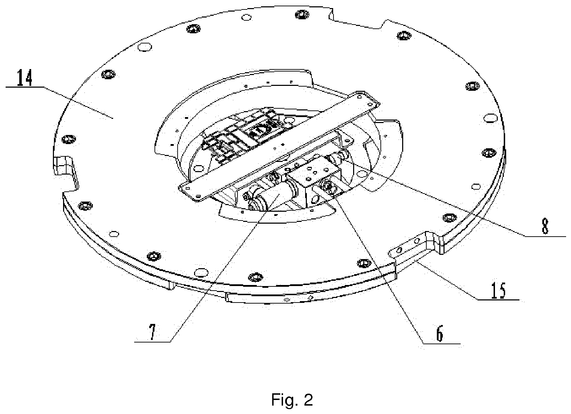

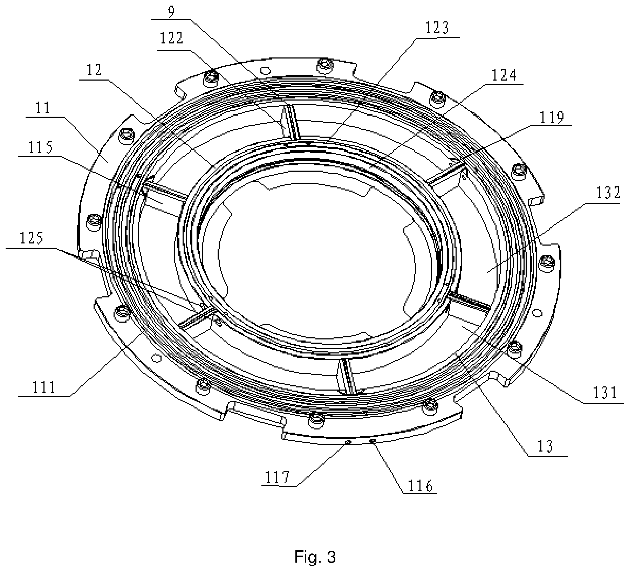

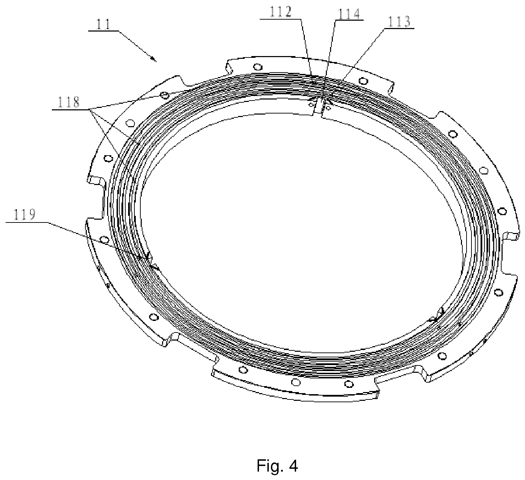

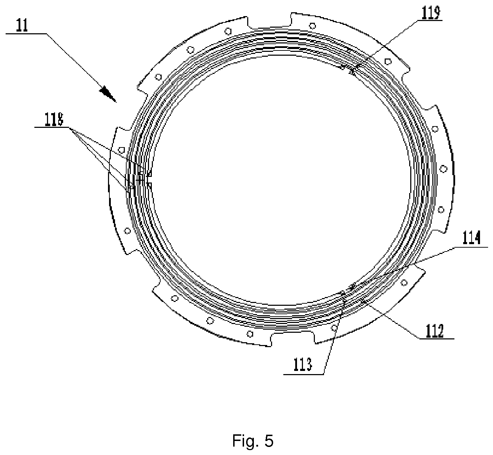

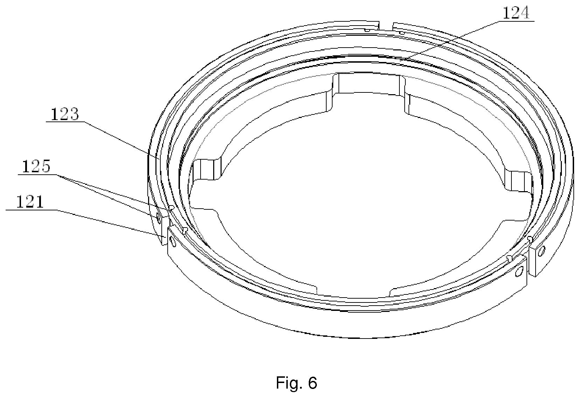

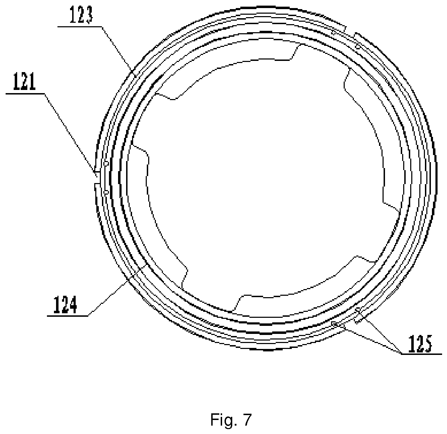

As shown in FIG.1-7, the rotary damper comprises a stator 11, a rotor 12 as well as an upper end cover 14 and a lower end cover 15 which are configured to package the stator 11 and the rotor 12, wherein the rotor 12 which is concentric with the stator 11 is configured on the inner side of the stator 11, and a hydraulic cavity 13 is formed between the stator 11 and the rotor 12.

The inner wall of the stator 11 is uniformly equipped with at least one partition board groove 114 in the circumferential direction (three partition board grooves 114 are configured in this embodiment), wherein partition boards 115 are fixedly arranged in the partition board grooves 114 to equally divide the hydraulic cavity 13 into a plurality of chambers; and the outer wall of the stator 11 is equipped with a first oil port 116 and a second oil port 117 which are symmetric and located on each of both sides of each partition board 115, wherein the first oil port 116 and the second oil port 117 are communicated with the first oil way 112 and the second oil way 113 respectively.

The end surface of a flange surface 111 of the stator 11 is also equipped with a plurality of sealing grooves 118 which are distributed alternatively with the first oil ways 112 and
the second oil ways 113 respectively and configured to seal the first oil ways 112 and the second oil ways 113 to avoid an oil leakage phenomenon.

The bottom of each partition board 115 is equipped with a compaction oil groove 119; when the rotor 12 rotates, hydraulic oil in the compressed chamber generates pressure, the compaction oil groove 119 applies a pressure to the partition board 115 to offset a centrifugal force generated when the partition board 115 rotates, and meanwhile, the partition board 115 is pressed towards the rotor 12, so that pre-pressing is generated between sealing rings 9 and the rotor 12 to enhance a sealing effect so as to ensure that the rotor 12 can compress the hydraulic oil when rotating relative to the rotor 12 to further generate pressure.

The circumferential surface of the outer wall of the rotor 12 is uniformly equipped with at least one blade groove 121 (three blade grooves 114 are configured in the embodiment), wherein a blade 122 is fixedly arranged in each blade groove 121, and the blades 122 and the partition boards 115 are arranged alternately.

The upper end surface of the rotor 12 is provided with an end surface sealing groove 123 in the circumferential surface, wherein an axial surface sealing groove 124 is additionally arranged on the inner wall of the rotor 12 in the circumferential direction, and PTFE (polytetrafluoroethylene) which is resistant to friction and high pressure is filled in the end surface sealing groove 123 to carry out plane sealing on the rotor 12; and polyurethane is filled in the axial sealing groove 124 to carry out axial surface rotary sealing on the rotor 12, so that the defects that the PTFE material is relatively hard, has a poor sealing effect and generates a little hydraulic oil leakage are remedied, the rotor is subjected to full sealing from two directions, namely the plane surface and the axial surface so as to ensure that no hydraulic oil leakage phenomenon exists in the rotary damper 1.

Oil suction valve mounting ports 125 which are symmetric are formed in both sides of each blade 122 and configured to suck hydraulic oil leaked from the upper plane of the stator 11 back to the chambers, so that an "oil stuffiness" phenomenon to finally cause leakage, since leaked oil generated in the plane sealing process is accumulated more and more between plane sealing and axial surface sealing, is avoided.

Sealing rings 9 are arranged on the outer surfaces of the blades 122 and the partition boards 115, between both ends of each partition board 115 and the stator 11 as well as both ends of each partition board 115 and the rotor 12, and both ends of each blade 122 and the stator 11 as well as both ends of each blade 122 and the rotor 12 so as to ensure that the rotor 12 can compress the hydraulic oil when rotating relative to the stator 11 to further generate pressure.

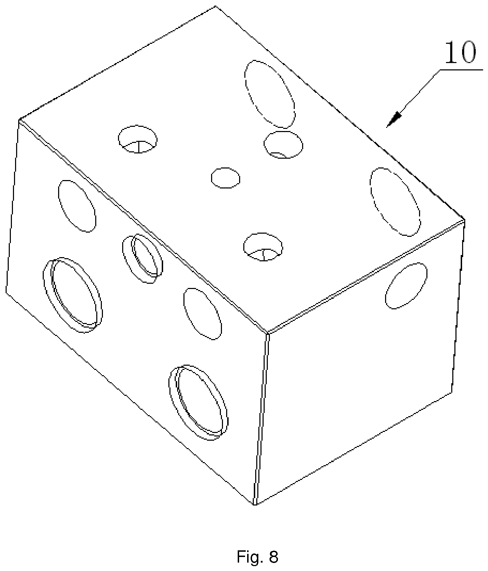

As shown in FIG.8, the hydraulic buffer system of the rotary damper also comprises a hydraulic integration block 10, all oil paths and valve equipment are arranged in the hydraulic integration block 10, and all the oil paths are arranged on the hydraulic integration block 10 by means of on-off of oil holes as well as geometric position arrangement and mounting of all the valves.

The control principle of the present invention is as follows:
When the rotor 12 rotates clockwise relative to the stator 11, hydraulic oil in the second cavity 132 is compressed to form a pressure-bearing cavity to generate pressure; in the meantime, the volume of a cavity body of the first cavity 131 becomes large, the cavity body internally generates a negative pressure and needs to be supplemented with hydraulic oil; at this moment, the second oil way 113 belongs to an oil discharge way, the compressed hydraulic oil enters the second oil port 117 through the second oil way 113, the second one-way valve 3 is opened, and the hydraulic oil reaches the port P of the overflow valve 6 and the port P of the proportional overflow valve 7; and when the pressure of hydraulic oil in the second oil way 113 reaches a pressure value set by the proportional overflow valve 7, the proportional overflow valve 7 is opened, the hydraulic oil reaches one end of the fourth one-way valve 5, and then the fourth one-way valve 5 is opened, the hydraulic oil enters the first oil way 112 from the first oil port, and the compressed hydraulic oil is supplemented to the cavity body of the first cavity 131.

In the same way, when the rotor 12 rotates anticlockwise relative to the stator 11, the hydraulic oil in the first cavity 131 is compressed to generate pressure; meanwhile, the volume of a cavity body in the second cavity 132 becomes large, the cavity body internally generates a negative pressure and needs to be supplemented with hydraulic oil; at this moment, the first oil way 112 belongs to an oil discharge way, so that the compressed hydraulic oil enters the first oil port 116 from the first oil way 112, the third one-way valve 4 is opened, and the hydraulic oil reaches the port P of the overflow valve 6 and the port P of the proportional overflow valve 7; and when the pressure of the hydraulic oil in the first oil way 112 reaches a pressure value set by the proportional overflow valve 7, the proportional overflow valve 7 is opened, the hydraulic oil reaches one end of the first one-way valve 2, and then the first one-way valve 2 is opened, the hydraulic oil enters the second oil way 113 from the second oil port 117, and then the compressed hydraulic oil is supplemented to the cavity body of the second cavity 132.

In a working process of the rotary damper, the pressure sensor 8 is configured to monitor of the pressure at the port P of the overflow valve 6 and the pressure at the port P of the proportional overflow valve 7 and transmit data to the electric control unit; the electric control unit is configured to correspondingly set a pressure value for the proportional overflow valve 7 according to a vehicle velocity signal sent from the vehicle and an angle signal sent from the angle sensor; the computer is configured to compare the measured pressure value at the port P of the proportional overflow valve 7 with a pressure value set by the system, and if the pressure value is slightly low, the electric control unit transmits a signal to the proportional overflow valve 7 and the proportional overflow valve 7 increases the pressure value after receiving the signal, so that the pressure at the port P reaches the set pressure value; and on the contrary, when the pressure value is slightly high, the proportional overflow valve 7 relieves the pressure after receiving the signal sent by the electric control unit, the pressure value is reduced, so that the pressure at the port P reaches the set pressure value. When the electric control system has a fault to cause power failure of the system, the proportional overflow valve 7 is at a completely closed state, the working pressure of the rotary damper 1 is a safety pressure set by the overflow valve 6 to support the vehicle to run to a repair factory, and the pressure value of the overflow valve 6 can be manually adjusted when the basic damping force needs to be regulated in the driving process. From the above, the hydraulic buffer system with the rotary damper is ingenious in design, high in integration level, concise and compact in structure, low in production cost and convenient to maintain and has a good buffer effect; and by means of design of the oil suction valves as well as plane sealing and axial surface sealing, the sealing effect is enhanced, and no "oil stuffiness" phenomenon is ensured.

The technical contents and the technical features of the present invention are disclosed as above, however, it is possible for those skilled in the art to make multiple substitutions and modifications, without departing from the scope of the present invention, on the basis of teaching and disclosure of the present invention. Therefore, the protection scope of the present invention should be not limited to the contents disclosed by the embodiments and should include various substitutions and modifications without departing from the present invention and should be covered by claims of the patent application.

## Claims

1. A hydraulic buffer system comprising:
a rotary damper (1) comprising a stator (11), a rotor (12) capable of rotating relative to the stator, and a hydraulic cavity (13) formed between the stator and the rotor,
a first one-way valve (2), a second one-way valve (3), a third one-way valve (4), a fourth one-way valve (5), and a proportional overflow valve (7),
a first oil way (112), wherein the second one-way valve, the proportional overflow valve, and the fourth one-way valve are sequentially connected in series to form the first oil way, and
a second oil way (113), wherein the third one-way valve, the proportional overflow valve, and the first one-way valve are sequentially connected in series to form the second oil way, wherein the hydraulic cavity comprising a first cavity (131) and a second cavity (132), wherein an outer wall of the stator (11) is equipped with a first oil port (116) and a second oil port (117) that are communicated with the first oil way and the second oil way, respectively, an wherein, when the rotor rotates anticlockwise, relative to the stator, the hydraulic oil in the first cavity is compressed to generate pressure; meanwhile, the volume of a cavity body in the second cavity becomes large, the cavity body internally generates a negative pressure and needs to be supplemented with hydraulic oil; at this moment, the first oil way belongs to an oil discharge way, so that the compressed hydraulic oil enters the first oil port (116) from the first oil way, the third one-way valve is opened, and the hydraulic oil reaches the port of the overflow valve and the port of the proportional overflow valve; and when the pressure of the hydraulic oil in the first oil way reaches a pressure value set by the proportional overflow valve, the proportional overflow valve is opened, the hydraulic oil reaches one end of the first one-way valve, and then the first one-way valve is opened, the hydraulic oil enters the second oil way from the second oil port, and then the compressed hydraulic oil is supplemented to the cavity body of the second cavity and when the rotor rotates clockwise relative to the stator, hydraulic oil in the second cavity is compressed to form a pressure-bearing cavity to generate pressure; in the meantime, the volume of a cavity body of the first cavity becomes large, the cavity body internally generates a negative pressure and needs to be supplemented with hydraulic oil; at this moment, the second oil way belongs to an oil discharge way, the compressed hydraulic oil enters the second oil port (117) through the second oil way, the second one-way valve is opened, and the hydraulic oil reaches the port of the overflow valve and the port of the proportional overflow valve; and when the pressure of hydraulic oil in the second oil way reaches a pressure value set by the proportional overflow valve, the proportional overflow valve is opened, the hydraulic oil reaches one end of the fourth one-way valve, and then the fourth one-way valve is opened, the hydraulic oil enters the first oil way from the first oil port, and the compressed hydraulic oil is supplemented to the cavity body of the first cavity; **characterized in that** a pressure sensor (8) is connected with the overflow valve and the proportional overflow valve in series and is configured to detect the pressure at a port of the overflow valve and the pressure at a port of the proportional overflow valve and transmit detected data to an electric control unit, the electric control unit is configured to correspondingly set a pressure value for the proportional overflow valve according to a vehicle velocity signal sent from the vehicle and an angle signal sent from an angle sensor; the electric control unit is configured to compare the measured pressure value at the port of the proportional overflow valve with a pressure value set by the electric control unit, and to adjust the pressure value of the port of the proportional overflow valve; when the electric control unit has a fault to cause power failure of the electric control unit, the proportional overflow valve (7) is at a completely closed state, the working pressure of the rotary damper (1) is a safety pressure set by the overflow valve (6), and the pressure value of the overflow valve (6) can be manually adjusted when a basic damping force needs to be regulated.

2. The hydraulic buffer system according to Claim 1, wherein the rotary damper also comprises an upper end cover and a lower end cover which are configured to package the stator and the rotor.

3. The hydraulic buffer system according to Claim 1, wherein the circumferential surface of an inner wall of the stator is equipped with at least one partition board groove, a partition board is fixedly arranged in each partition board groove, and the first oil port and the second oil port which are symmetrical and are respectively located in both sides of each partition board.

4. The hydraulic buffer system according to Claim 3, wherein the bottom of each partition board groove is equipped with a compaction oil groove.

5. The hydraulic buffer system according to Claim 1, wherein an end surface of the stator and an end surface of the rotor are equipped with a sealing groove respectively.

6. The hydraulic buffer system according to Claim 3, wherein a circumferential surface of the outer wall of the rotor is equipped with at least one blade groove, a blade is fixedly arranged in each the blade groove, and an oil suction valve mounting port is formed in each of both sides of each blade.

7. The hydraulic buffer system according to Claim 6, wherein the at least one first cavity and the at least one second cavity of the hydraulic cavity are formed by the partition boards and the blades in a spacing manner.

8. The hydraulic buffer system according to Claim 1, wherein the hydraulic buffer system with the rotary damper also comprises a hydraulic integration block and all the oil ways and valve equipment are configured in the hydraulic integration block

## Patentansprüche

1. Ein hydraulisches Puffersystem, umfassend:
Einen Rotationsdämpfer (1), der einen Stator (11), einen Rotor (12), der um den Stator rotieren kann, und einen hydraulischen Hohlraum (13) umfasst, der zwischen dem Stator und dem Rotor geformt ist,
ein erstes Einwegventil (2), ein zweites Einwegventil (3), ein drittes Einwegventil (4), ein viertes Einwegventil (5) und ein Proportional-Überstromventil (7),
eine erste Ölleitung (112), in der das zweite Einwegventil, das Proportional-Überstromventil und das vierte Einwegventil nacheinander in Reihe verbunden sind, um die erste Ölleitung zu bilden, und
eine zweite Ölleitung (113), in der das dritte Einwegventil, das Proportional-Überstromventil und das erste Einwegventil nacheinander in Reihe verbunden sind, um die zweite Ölleitung zu bilden,
wobei der hydraulische Hohlraum einen ersten Hohlraum (131) und einen zweiten Hohlraum (132) umfasst,
wobei eine Außenwand des Stators (11) mit einem ersten Ölanschluss (116) und einem zweiten Ölanschluss (117) ausgestattet ist, die mit der ersten Ölleitung bzw. der zweiten Ölleitung verbunden sind, und wobei, wenn sich der Rotor, im Verhältnis zum Stator, gegen den Uhrzeigersinn dreht, das Hydrauliköl im ersten Hohlraum komprimiert wird, um Druck zu erzeugen; währenddessen vergrößert sich das Volumen eines Hohlraumkörpers im zweiten Hohlraum, der Hohlraumkörper erzeugt intern einen negativen Druck und muss mit Hydrauliköl ergänzt werden; zu diesem Zeitpunkt gehört die erste Ölleitung zu einer Ölablaufleitung, so dass das komprimierte Hydrauliköl von der ersten Ölleitung in den ersten Ölanschluss (116) fließt, das dritte Einwegventil wird geöffnet und das Hydrauliköl erreicht den Anschluss des Überströmventils und den Anschluss des Proportional-Überstromventils; und wenn der Druck des Hydrauliköls in der ersten Ölleitung einen Druckwert erreicht, der vom Proportional-Überstromventil festgelegt wurde, wird das Proportional-Überstromventil geöffnet, das Hydrauliköl erreicht ein Ende des ersten Einwegventils, dann wird das erste Einwegventil geöffnet, das Hydrauliköl fließt vom zweiten Ölanschluss in die zweite Ölleitung, und dann wird das komprimierte Hydrauliköl zum Hohlraumkörper der zweiten Hohlraums ergänzt; und
wenn sich der Rotor im Uhrzeigersinn im Verhältnis zum Stator dreht, wird Hydrauliköl im zweiten Hohlraum komprimiert, um einen unter Druck stehenden Hohlraum zu bilden, der Druck erzeugt; in der Zwischenzeit vergrößert sich das Volumen eines Hohlraumkörpers des ersten Hohlraums, der Hohlraumkörper erzeugt intern einen negativen Druck und muss mit Hydrauliköl ergänzt werden; zu diesem Zeitpunkt gehört die zweite Ölleitung zu einer Ölablaufleitung, das komprimierte Hydrauliköl fließt durch die zweite Ölleitung in den zweiten Ölanschluss (117), das zweite Einwegventil wird geöffnet und das Hydrauliköl erreicht den Anschluss des Überströmventils und den Anschluss des Proportional-Überstromventils; und wenn der Druck des Hydrauliköls in der zweiten Ölleitung einen Druckwert erreicht, der vom Proportional-Überstromventil festgelegt wurde, wird das Proportional-Überstromventil geöffnet, das Hydrauliköl erreicht ein Ende des vierten Einwegventils, und dann wird das vierte Einwegventil geöffnet, das Hydrauliköl fließt aus dem ersten Ölanschluss in die erste Ölleitung, und das komprimierte Hydrauliköl wird zum Hohlraumkörper des ersten Hohlraums ergänzt;
**gekennzeichnet dadurch dass** ein Drucksensor (8) mit dem Überstromventil und dem Proportional-Überstromventil in Reihe verbunden ist und konfiguriert ist, um den Druck an einem Anschluss des Überströmventils und den Druck an einem Anschluss des Proportional-Überstromventils zu erfassen und die erfassten Daten an eine elektronische Steuereinheit zu übermitteln, die elektrische Steuereinheit ist konfiguriert, um entsprechend einen Druckwert für das Proportional-Überstromventil gemäß eines Fahrzeuggeschwindigkeitssignals einzustellen, das von dem Fahrzeug gesendet wird, und ein Winkelsignal, das von einem Winkelsensor gesendet wird; die elektrische Steuereinheit ist konfiguriert, um den gemessenen Druckwert am Anschluss des Proportional-Überstromventils mit einem Druckwert zu vergleichen, der von der elektrischen Steuereinheit eingestellt wurde, und den Druckwert des Anschlusses des Proportional-Überstromventils einzustellen;
wenn die elektrische Steuereinheit eine Störung aufweist, die einen Stromausfall der Steuereinheit verursacht, geht das Proportional-Überstromventil (7) in einen vollständig geschlossenen Zustand über, der Betriebsdruck des Rotationsdämpfers (1) ist ein Sicherheitsdruck, der vom Überstromventil (6) eingestellt wird, und der Druckwert des Überströmventils (6) kann manuell eingestellt werden, wenn die Hauptdämpfungskraft reguliert werden muss.

2. Das hydraulische Puffersystem nach Anspruch 1, wobei der Rotationsdämpfer auch eine Abdeckung am oberen Ende und eine Abdeckung am unteren Ende umfasst, die konfiguriert sind, um den Stator und den Rotor zu verpacken.

3. Das hydraulische Puffersystem nach Anspruch 1, wobei die Umfangsfläche einer Innenwand des Stators mit mindestens einer Trennplatten-Nut ausgestattet ist, eine Trennplatte ist fest in jeder Trennplatten-Nut angeordnet und der erste Ölanschluss und der zweite Ölanschluss, die symmetrisch sind, sind jeweils auf beiden Seiten jeder Trennplatte positioniert.

4. Das hydraulische Puffersystem nach Anspruch 3, wobei die Unterseite jeder Trennplatten-Nut mit einer Verdrängungs-Ölnut ausgestattet ist.

5. Das hydraulische Puffersystem nach Anspruch 1, wobei eine Endfläche des Stators bzw. eine Endfläche des Rotors mit einer Dichtnut ausgestattet sind.

6. Das hydraulische Puffersystem nach Anspruch 3, wobei eine Umfangsfläche der Außenwand des Rotors mit mindestens einer Flügelnut ausgestattet ist, ein Flügel ist fest in jeder Flügelnut angeordnet und ein Öl-Ansaugventil-Befestigungsanschluss ist auf beiden Seiten des jeweiligen Flügels ausgebildet.

7. Das hydraulische Puffersystem nach Anspruch 6, wobei der mindestens eine erste Hohlraum und der mindestens eine zweite Hohlraum des hydraulischen Hohlraums durch die Trennplatten und die Flügel in Abständen angeordnet ausgebildet werden.

8. Das hydraulische Puffersystem nach Anspruch 1, wobei das hydraulische Puffersystem mit dem Rotationsdämpfer auch eine hydraulische Einbindung umfasst und alle Ölleitungen und Ventilvorrichtungen in dem Block der hydraulischen Einbindung konfiguriert sind.

## Revendications

1. Système d'amortissement hydraulique comprenant :
un amortisseur rotatif (1) comprenant un stator (11), un rotor (12) apte à tourner par rapport au stator et une cavité hydraulique (13) formée entre le stator et le rotor,
une première soupape unidirectionnelle (2), une deuxième soupape unidirectionnelle (3), une troisième soupape unidirectionnelle (4), une quatrième soupape unidirectionnelle (5), et une soupape de trop-plein proportionnelle (7),
un premier passage d'huile (112), dans lequel la deuxième soupape unidirectionnelle, la soupape de trop-plein proportionnelle et la quatrième soupape unidirectionnelle sont successivement raccordées en série pour former le premier passage d'huile et
un deuxième passage d'huile (113), dans lequel la troisième soupape unidirectionnelle, la soupape de trop-plein proportionnelle et la première soupape unidirectionnelle sont successivement raccordées en série pour former le deuxième passage d'huile,
dans lequel la cavité hydraulique comprenant une première cavité (131) et une deuxième cavité (132),
dans lequel une paroi extérieure du stator (11) est équipée d'un premier orifice d'huile (116) et d'un deuxième orifice d'huile (117) qui communiquent avec le premier passage d'huile et le deuxième passage d'huile respectivement et dans lequel, lorsque le rotor tourne dans le sens antihoraire, par rapport au stator, l'huile hydraulique dans la première cavité est comprimée pour générer la pression ; entre-temps, le volume d'un corps de cavité dans la deuxième cavité devient grand, le corps de cavité génère en interne une pression négative et doit être complété avec de l'huile hydraulique ; à cet instant, le premier passage d'huile appartient à un passage de décharge d'huile, de manière à ce que l'huile hydraulique comprimée pénètre dans le premier orifice d'huile (116) à partir du premier passage d'huile, la troisième soupape unidirectionnelle est ouverte et l'huile hydraulique atteint l'orifice de la soupape de trop-plein et l'orifice de la soupape de trop-plein proportionnelle ; et lorsque la pression d'huile hydraulique dans le premier passage d'huile atteint une valeur de pression établie par la soupape de trop-plein proportionnelle, la soupape de trop-plein proportionnelle est ouverte, l'huile hydraulique atteint une extrémité de la première soupape unidirectionnelle et ensuite la première soupape unidirectionnelle est ouverte, l'huile hydraulique pénètre dans le deuxième passage d'huile à partir du deuxième orifice d'huile et ensuite l'huile hydraulique comprimée complète le corps de cavité de la deuxième cavité ; et
lorsque le rotor tourne dans le sens horaire par rapport au stator, l'huile hydraulique dans la deuxième cavité est comprimée pour former une cavité supportant la pression pour générer la pression ; dans l'intervalle, le volume d'un corps de cavité de la première cavité devient grand, le corps de cavité interne génère une pression négative et doit être complété avec de l'huile hydraulique ; à cet instant, le deuxième passage d'huile appartient à un passage de décharge d'huile, l'huile hydraulique comprimée pénètre dans le deuxième orifice d'huile (117) à travers le deuxième passage d'huile, la deuxième soupape unidirectionnelle est ouverte et l'huile hydraulique atteint l'orifice de la soupape de trop-plein et l'orifice de la soupape de trop-plein proportionnelle ; et lorsque la pression de l'huile hydraulique dans le deuxième passage d'huile atteint une valeur de pression établie par la soupape de trop-plein proportionnelle, la soupape de trop-plein proportionnelle est ouverte, l'huile hydraulique atteint une extrémité de la quatrième soupape unidirectionnelle et ensuite la quatrième soupape unidirectionnelle est ouverte, l'huile hydraulique pénètre dans le premier passage d'huile à partir du premier orifice d'huile et l'huile hydraulique comprimée complète le corps de cavité de la première cavité ;
**caractérisé en ce qu'**un capteur de pression (8) est raccordé avec la soupape de trop-plein et la soupape de trop-plein proportionnelle en série et est conçu pour détecter la pression à un orifice de la soupape de trop-plein et la pression à un orifice de la soupape de trop-plein proportionnelle et transmettre les données détectées à une unité de commande électrique, l'unité de commande électrique est configurée pour établir une valeur de pression pour la soupape de trop-plein proportionnelle selon un signal de vitesse de véhicule envoyé depuis le véhicule et un signal d'angle envoyé depuis un capteur d'angle; l'unité de commande électrique est configurée pour comparer la valeur de pression mesurée à l'orifice de la soupape de trop-plein proportionnelle avec une valeur de pression définie par l'unité de contrôle électrique et pour régler la valeur de pression de l'orifice de la soupape de trop-plein proportionnelle;
lorsque l'unité de commande électrique présente un défaut pour entraîner une défaillance électrique, l'unité de commande électrique, la soupape de trop-plein proportionnelle (7) est dans un état complètement fermé, la pression de service de l'amortisseur rotatif (1) est une pression de sécurité établie par la soupape de trop-plein (6) et la valeur de pression de la soupape de trop-plein (6) peut être réglée manuellement lorsque la force d'amortissement de base doit être régulée.

2. Système d'amortissement hydraulique selon la revendication 1, dans lequel l'amortisseur rotatif comprend également un couvercle d'extrémité supérieure et un couvercle d'extrémité inférieure qui sont conçus pour emballer le stator et le rotor.

3. Système d'amortissement hydraulique selon la revendication 1, dans lequel la surface périphérique d'une paroi intérieure du stator est équipée d'au moins une rainure de panneau de séparation et le panneau de séparation est disposé à demeure dans chaque rainure de panneau de séparation et le premier orifice d'huile et le deuxième orifice d'huile qui sont symétriques et sont situées respectivement dans les deux côtés de chaque panneau de séparation.

4. Système d'amortissement hydraulique selon la revendication 3, dans lequel la partie inférieure de chaque rainure de panneau de séparation est équipée d'une rainure de compactage d'huile.

5. Système d'amortissement hydraulique selon la revendication 1, dans lequel une surface d'extrémité du stator et une surface d'extrémité du rotor sont équipées respectivement d'une rainure d'étanchéité.

6. Système d'amortissement hydraulique selon la revendication 3, dans lequel une surface périphérique de la paroi extérieure du rotor est équipée d'au moins une rainure de lame, une lame est disposée à demeure dans chaque rainure de lame et un orifice de montage de la soupape d'aspiration d'huile est formé dans chacun des deux côtés de chaque lame.

7. Système d'amortissement hydraulique selon la revendication 6, dans lequel la ou les premières cavités et la ou les deuxièmes cavités de la cavité hydraulique sont formées par les panneaux de séparation et les lames dans un arrangement espacé.

8. Système d'amortissement hydraulique selon la revendication 1, dans lequel le système d'amortissement hydraulique comportant l'amortisseur rotatif comprend également une intégration hydraulique et tous les passages d'huile et les équipements de soupape sont conçus dans le bloc d'intégration hydraulique.
